# EUROPEAN PATENT SPECIFICATION

(11) **EP 3 706 881 B1**
(45) Date of publication and mention of the grant of the patent: **23.10.2024**
(21) Application number: 18875382.6
(22) Date of filing: 09.11.2018
(51) Int. Cl.: B64D 33/02, F03B 17/06, B01D 45/12, F02C 7/055, F03B 3/04, F03B 11/02, F03B 3/18, F03B 13/10, F03B 11/08

(54) **ACCELERATED AND/OR REDIRECTED FLOW-INDUCING AND/OR LOW PRESSURE FIELD/AREA-INDUCING ARRANGEMENT THEIR USE WITH TURBINE-LIKE DEVICES AND METHOD FOR USING SAME**
BESCHLEUNIGTE UND / ODER UMGELENKTE STRÖMUNGSINDUZIERENDE UND / ODER NIEDERDRUCKFELD/-BEREICHSINDUZIERENDE ANORDNUNG, DEREN VERWENDUNG MIT TURBINENARTIGEN VORRICHTUNGEN UND VERWENDUNGSVERFAHREN DAFÜR
AGENCEMENT D'INDUCTION DE FLUX ACCÉLÉRÉ ET/OU REDIRIGÉ ET/OU D'INDUCTION DE ZONE/CHAMP BASSE PRESSION, LEUR UTILISATION AVEC DES DISPOSITIFS DE TYPE TURBINE ET LEUR PROCÉDÉ D'UTILISATION

(30) Priority: 09.11.2017 US 201762584098 P
(43) Date of publication of application: 16.09.2020
(73) Proprietor: Hydrokinetic Energy Corp., Key West, Florida 33040 (US)
(72) Inventor: SCHURTENBERGER, Walter, Key West FL 33040 (US)
(74) Representative: Simmons & Simmons
(86) International application number: PCT/US2018/060039
(87) International publication number: WO 2019/094726

(56) References cited:
- WO-A1-81/00595
- WO-A2-2016/130984
- WO-A2-2016/130984
- CH-A5- 684 430
- US-A- 5 411 224
- US-A- 5 411 224
- US-B1- 6 508 191
- US-B2- 7 471 009
- US-B2- 8 851 828

## Description

### Background of the Invention

This application relates to an arrangement for providing an accelerated and/or redirected flow, preferably a vorticized or rotating flow on the inlet side and/or inducing and/or increasing a low-pressure field on the output side of a fluid-driven rotary power- generating device, e.g., a turbine, a hydrokinetic generator, a wind generator or other device that uses a rotor blade or impeller structure to translate the force of moving fluid into radial or rotary power (such devices hereinafter referred to for ease as "turbine-like devices"). The reason for associating the accelerated and/or redirected flow-inducing/low pressure field-inducing arrangement with a turbine-like device is to increase the efficiency or energy output of the device. The application also relates to a method and apparatus for enhancing the performance of a turbine-like device utilizing the accelerated and/or redirected flow- inducing arrangement and/or the low-pressure field-inducing arrangement according to the application.

It is known for turbine-like devices to be provided with a Wildlife and Debris Excluder (WDE); however, these WDE's are not commonly employed for most turbinelike devices, especially hydro-turbines, due to added expense and perhaps more importantly, due to the anticipated lowering of power-generating performance, since any type of WDE represents a flow-restricting/limiting obstacle at the inlet and/or outlet of the turbine-like device and has a certain blockage effect on the water flow. In the preferred embodiments of the present disclosure, the accelerated and/or redirected flow-inducing/low pressure field-inducing arrangement of the invention can also serve the function of a WDE. The accelerated and/or redirected flow-inducing/low pressure field-inducing arrangement, which can be advantageously employed as a WDE is preferably comprised of two parts, which are preferably used together but may also advantageously be used individually.

One part is designed to be placed in front of the intake of any turbine-like device, and the other part is designed to be placed behind the exit of any type of turbine-like device. The first part that is placed in front of the intake of a turbine-like device will be referred to as an "accelerated and/or redirected flow-inducing arrangement", preferably in the form of a WDE. The second part will be referred to as a "low pressure field-inducing arrangement", preferably in the form of a WDE.

The arrangements of the invention can be employed with an turbine-like device, and are most advantageously employed in combination with hydrokinetic energy producing devices of the type described in published patent application WO 2016/130984 A2. Most preferably, the arrangements of the invention also serve as WDE's for these hydrokinetic energy producing devices. The present accelerated and/or redirected flow-inducing/low pressure field-inducing arrangements can advantageously be retro-fitted to existing turbine-like devices.

Both arrangements, the accelerated and/or redirected flow-inducing arrangement, preferably a vortex- or rotation-inducing arrangement, and the low-pressure field-inducing arrangement, are suitable for operation in any type of moving fluid for generating vorticized or rotational flow in front of the intake of any turbine-like device or any device with a central rotor or impeller and/or for generating a low-pressure field behind the exit of any turbine-like device or any device with a central rotor or impeller. They are applicable to or can be used in any kind of fluid that flows with a minimum ambient flow velocity of at least about 0.25m/s and flows through the turbine-like section. Preferably, the fluid is water.

The turbine-like devices with the associated accelerated and/or redirected -flow- inducing and/or low-pressure field-inducing arrangements of the invention may be placed underwater to introduce an accelerated and/or redirected flow, preferably a vorticized/rotational flow and/or a low-pressure field/area into a stream or current of water, or they may be placed into the air to induce an accelerated and/or redirected flow, preferably vorticized flow and/or low pressure into an air flow or current of moving air or wind. These turbine-like devices may also be mounted on a vessel or a vehicle, fixed mounted or tethered, floating or submersed, land-based or airborne. They may be installed on a fixed device or tethered to a device that is placed in a naturally occurring/existing moving fluid, fluid current or stream, or it may be towed or pushed through the fluid, or it may be installed on another device or method to artificially create a flow of the fluid through the turbine- like device. Most preferably, the arrangements according to the invention can advantageously be used in connection with hydrokinetic energy devices utilized for producing energy from moving water, especially in rivers, dammed-up bodies of water, ocean currents and/or tidal currents.

WO 2016/130984 A2 relates to unidirectional hydrokinetic turbines having an improved flow acceleration system that uses asymmetrical hydrofoil shapes on some or all of the key components of the turbine.

CH 684430 A5 describes a water turbine accommodated in a common housing together with a generator, which is arranged on the same shaft.

US 6508191 B1 describes an underwater generator for use with a surface vessel having a cylindrical housing with two major parts: a turbine and a generator.

WO 8100595 A1 describes a plant for producing electric power from a watercourse which is comprised of immersed turbines.

US 5411224 A describes a guard apparatus for the intake of a jet engine which includes a generally conically shaped structure that has a plurality of concentric rings of gradually decreasing diameter beginning at a largest ring that affixes to the cowl of the jet engine and progressively smaller diameter concentric rings spaced toward the front end portion of the guard apparatus.

### Summary of Invention

The invention is defined by the features of the independent claim. A selection of optional features of the invention is set out in the dependent claims.

### Brief Description of Drawings

In the drawings:
Fig. 1 is a side view of a turbine blade/rotor section of a turbine-like device showing various numbered performance parameters;
Fig. 2 is a perspective view of a turbine rotor showing various numbered performance parameters;
Fig. 3 is a schematic perspective view showing one embodiment of a device of the invention;
Fig. 4 is a detailed perspective view showing cross-sectional configurations of rod members in the devices according to the invention;
Fig. 5 is an end view of the device shown in Fig. 3;
Fig. 6 is an exploded partial view of a portion of Fig. 5, showing cross-sectional configurations of rod members in the devices according to the invention;
Fig. 7 is a side plan view of the device shown in Fig. 3;
Fig. 8 is an exploded partial view of a portion of Fig. 7, showing cross-sectional configurations of rod members and a connecting support member in the devices according to the invention;
Fig. 9 is a perspective view of another embodiment according to the invention; Fig. 10 is a detail view of a portion of the device of Fig. 9, showing cross-sectional configurations of rod members in the devices according to the invention;
Fig. 11 is an end view of the device of Fig. 9;
Fig. 12 is a detailed side view of a rod showing its cross-sectional configuration;
Fig. 13 is a perspective view of two embodiments of the invention that can be used together in combination with a turbine-like device;
Fig. 14 is a CFD analysis showing fluid velocity and fluid acceleration across a section of a hydrokinetic turbine fitted with the two WDE devices illustrated in Fig. 13;
Fig. 15 is a CFD analysis similar to Fig. 14, but showing fluid pressure across a section of a hydrokinetic turbine fitted with the two WDE devices illustrated in Fig. 13; and
Fig. 16 is similar to Fig. 14, but shown at a different scale and including streamlines for flow redirection. Fig. 17 is a cross-sectional view of an exemplary turbine, with front and rear wildlife and debris excluders;
Fig. 18A is a partial cross-sectional view of an S-shaped/double-curved hydrofoil accelerator shroud, in an arrangement as shown in Fig. 21, with annular diffuser;
Fig. 18B is a partial cross-sectional view of a non-S-shaped hydrofoil accelerator shroud, in an arrangement as shown in Fig. 21, with annular diffuser;

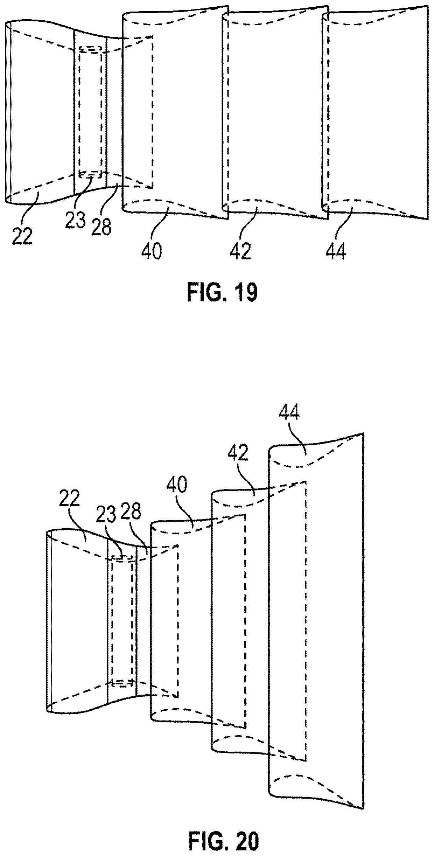

Fig. 19 is a partial cross-sectional view of another embodiment of an accelerator shroud, with multiple annular diffusers of similar diameters;
Fig. 20 is a partial cross - sectional view of another embodiment of an accelerator shroud, with multiple annular diffusers with different diameters;
Fig. 21 is a three-dimensional view of one embodiment of an entire turbine with central rotor section;
Fig. 22 is a cross-sectional view the entire turbine of Fig.21 , with central rotor section in place;
Fig. 23 is an isolated perspective view of the accelerator shroud, schematically showing the placement of coils;
Fig. 24 is a three-dimensional view of the rotor section alone of the embodiment of Fig. 21;
Fig. 25 is a schematic side view of the rotor section of Fig. 21, showing one of the hydrofoil shaped rotor blades, the rotor blade shroud and the hydrofoil shaped center hub; Fig.26 is a perspective view of four rotor blades alone in the embodiment of Fig. 21;
Fig. 27 is an isolate perspective view of a single exemplary rotor blade;
Fig. 28 is a cross-sectional view of one embodiment of a rotor blade, illustrating certain preferred features, including the variable angle of attack, variable cord length, and variable thickness of profile and twist;
Fig. 29 is an isolated perspective view of a four-rotor blade embodiment with cross- sections of hydrofoil shapes of the blades;
Fig. 30 is a perspective view of single rotor blade alone with cross-sections of hydrofoil shapes;
Fig. 31 is an exploded perspective view schematically showing all components in partial cross-section according to one embodiment of the invention;
Fig. 32 is an exploded view of the turbine of Fig. 19, showing all components in a schematic side view and partially in section;
Fig. 33 is a schematic side view and front view of a rotor blade for use in a 3 kn current; and
Fig. 34 is a more detailed schematic side view of an accelerator shroud, diffuser and center hub utilizing the rotor blade of Fig. 33.

### Detailed Description of Preferred Embodiments of the Invention

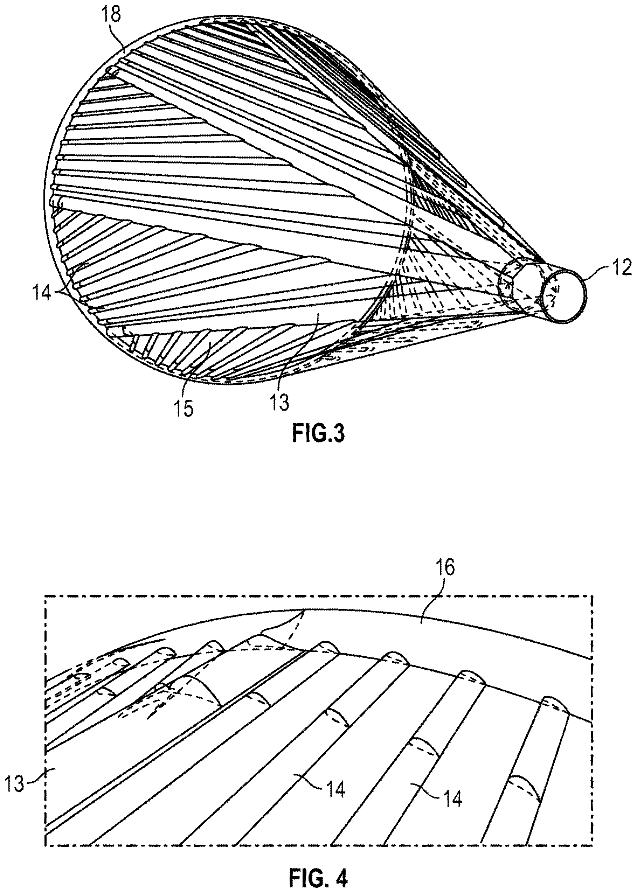

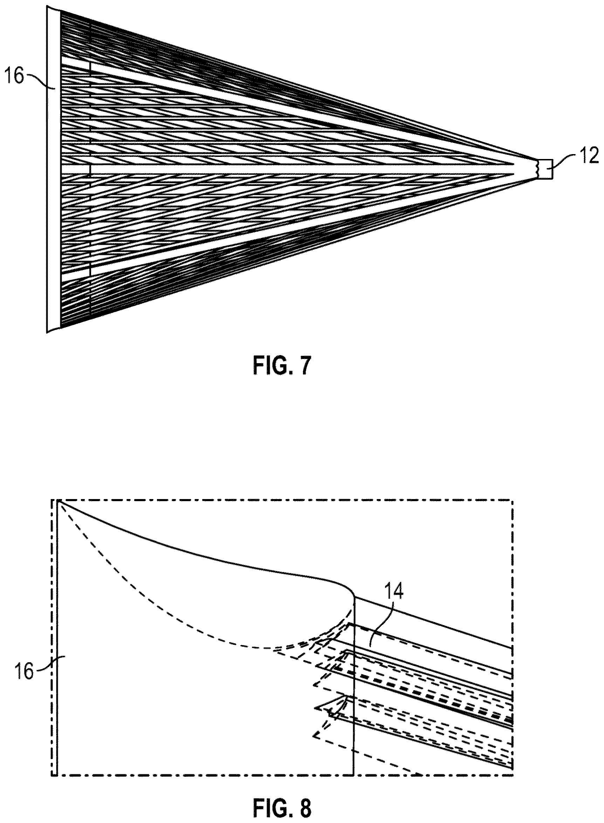

According to one preferred embodiment of the invention, the first or forward arrangement (10) for creating an accelerated and/or redirected flow (Figs. 3, 4, 5, 6, 7, 8 and 17) has a unique way of creating a vorticized/rotational flow in the fluid prior to the fluid entering or being aspirated or pushed into the entrance of a nozzle or intake 22 of a turbine-like device (8) to create a directional change and/or a directional acceleration of the fluid. The change in direction/rotation can be in either direction or sense, clockwise or counterclockwise, i.e., meaning that it can be either in the same direction as the rotating blade member(s) 34 of the turbine-like device (8) or in the opposite direction. The preferred direction of rotation is opposite to the direction of the rotating blades; however, beneficial effects are achieved also in the case of rotation in the same direction of the blades.

Use of one or both of the forward (10) and rear (18) arrangements of the invention allows the receiving turbine-like device to at least operate at a not-impaired efficiency level, but preferably at a higher efficiency level, than it would do without the use of any accelerated and/or redirected flow-inducing and/or low-pressure field-inducing arrangement, such as a WDE. When using the forward arrangement (10) also as a WDE device, the unique way of creating vorticized/rotational flow in the fluid prior to entering a turbine-like device (8) to create change of direction or acceleration (most preferably directional acceleration) of the fluid, allows the receiving device to operate at a higher efficiency level than it would do with other WDE devices, i.e., to eliminate any negative effects of using a WDE, which are normally caused by the blockage effect or turbulence created by other WDEs.

The preferred front arrangement (10) of the invention will also make a turbine-like device produce a higher power/energy output or operate more efficiently than the same turbine would achieve without the vortex/rotational flow inducing device. It can also mean that a turbine-device fitted with the front arrangement may be as efficient in a lower velocity environment as other turbines are in a higher velocity environment.

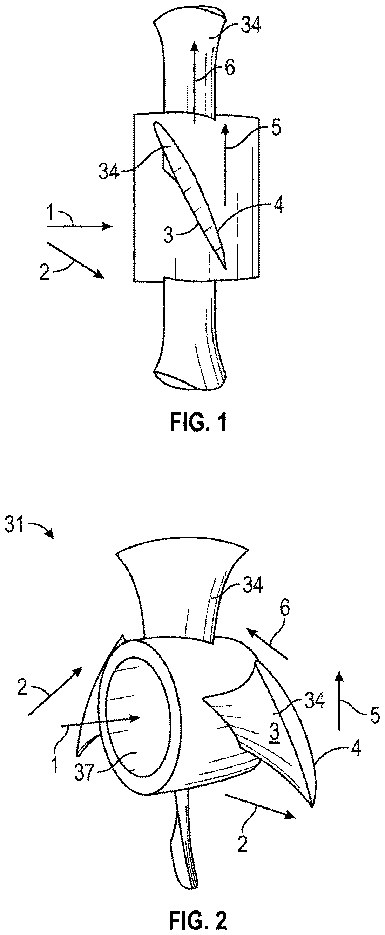

The vorticized/rotational flow of the fluid created by the preferred front arrangement (10) results in the rotational flow direction to be preferably in the opposite direction of the rotation of the rotor blades 34 inside the turbine, since this has been found to maximize the increase in efficiency (Figs. 1, 2). The normal axial direction of flow without WDE is shown as (1). The force vector of the fluid current, which is normally essentially in the axial direction of the turbine without a WDE, has now been changed by the WDE to have a certain amount of a redirected, rotational directional component (2), preferably in the opposite direction of the rotation of the blades of the rotor or impeller of the turbine-like device,

This vorticized/rotational flow-inducing arrangement increases the load of the fluid on the surface of the blades of the rotors or impellers of the turbine-like device (8). Increasing the load on the rotor blades has the effect to increase the pressure on the blades inside the turbine device due to the rotating flow leaving the excluder in the opposite direction of the rotor blade or impeller rotation (5). This increased pressure and loading of the upstream side (intrados) (3) of the hydrofoil shaped rotor blade also creates a greater pressure differential between intrados and extrados (4) (the downstream side) of the rotor blades or impeller, resulting in the blades generating more lift in the direction of the rotation and more torque (6) in the direction of the rotation.

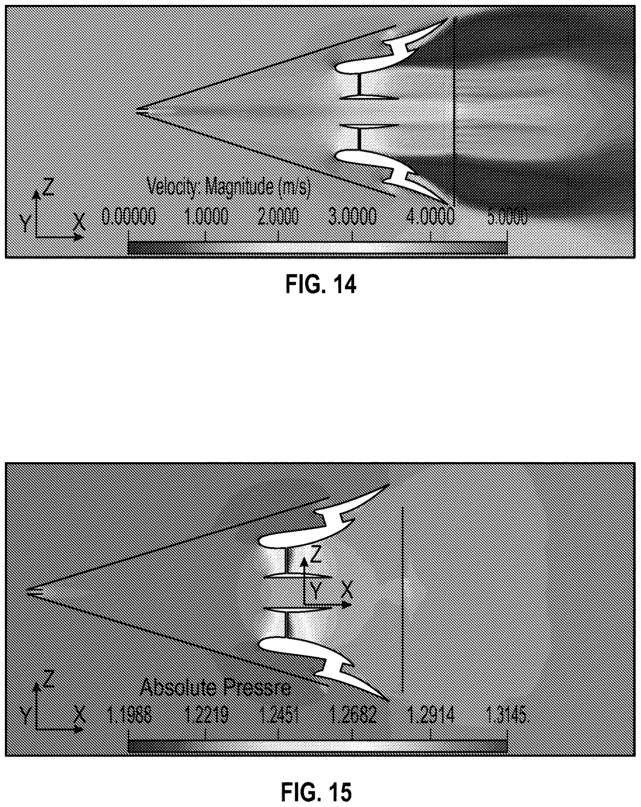

This increased loading of the rotor blades has the same effect on the turbine rotor 31 that an increased rotative speed of the blades would have, although the RPM of the rotor is not necessarily increased. This increased loading is mainly due to the vorticized/rotating flow leaving the front arrangement, preferably in opposite sense of the blade rotation, a feature which is comparable to a (fictitious!) increase of the rotative speed of the rotor, impeller or propeller. (An increased rotative speed of the rotor in the fluid would create more thrust, which then results in an increased efficiency or higher power/energy output of the turbine.) With this vorticized/rotational flow-inducing arrangement, the additional thrust and torque is achieved by the hydrodynamic effect of a higher load on the rotor blades rather than increasing the rotative speed. The effects of this vorticized/rotating flow and the increased pressure, thrust and flow acceleration become visible in the CFD analysis (Figs. 14, 15, 16).

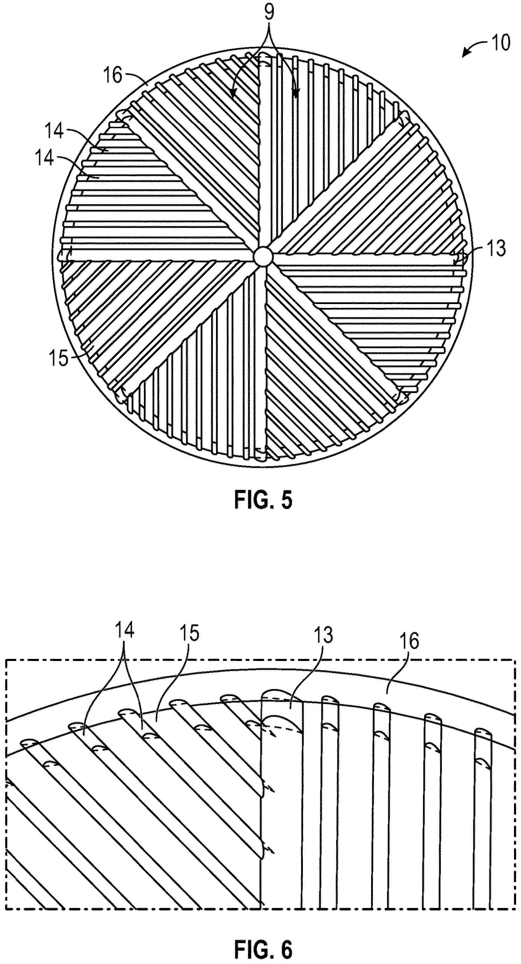

To induce the vorticized/rotational flow in one preferred embodiment, first, the orientation/attachment rods (13) and the deflector rods (14) making up the arrangement are deployed in an array (9) that has the effect of inducing a rotational flow, one typical preferred example of which is shown in the Figs. 3, 4, 5, 6, 7 and 8 of drawings. Fig. 5 is an end view of the device shown in Fig. 3, showing the arrangement of multiple arrays (or sub-arrays) (9) of deflector rods (14) arranged in selected different orientations in a circumferential pattern around the center of the WDE, according to one preferred embodiment. Any design or array that produces rotary flow is suitable, with the objective of producing the most rotational flow with the least flow resistance loss. Thus, although any cross-sectional shape is suitable for the rods (or blades), e.g., round, flat, oval, etc., a second, preferred feature of the invention is to provide that at least some and preferably all of the individual orientation/attachment rods (13) and the deflector rods (14) of the front arrangement (10) have a hydrofoil/airfoil-shaped cross-sectional shape, with the extrados of the hydrofoil/airfoil shaped rods being on the upstream side of the rods and the intrados of the hydro/airfoil shaped rods being on the downstream side of the rods. In other words, the leading edge of the hydrofoil/airfoil shaped rods point into fluid current and the trailing edge of the hydrofoil/airfoil shaped rods point away from the fluid current. It is also preferred that the rear/aft attachment ring (16) for the rods (13), (14) has a hydrofoil-shaped cross-section, as seen in Fig. 4.

These hydrofoil/airfoil shaped rods direct the fluid, water or air into the direction intended by the orientation of the hydrofoil/airfoil, redirecting and giving the fluid entering the turbine-like device a rotational motion, preferably the opposite direction of the rotation of the turbine/rotor/propeller blades or impeller (Figs. 1, 2). With the usage of this arrangement, particularly as a WDE, the flow direction of the fluid is now not just purely axial but has a radial component to it. The flow also has a degree of acceleration to it, due to the hydrofoil/airfoil effect of the preferred orientation and cross-sectional shape of the rods (13) and/or (14).

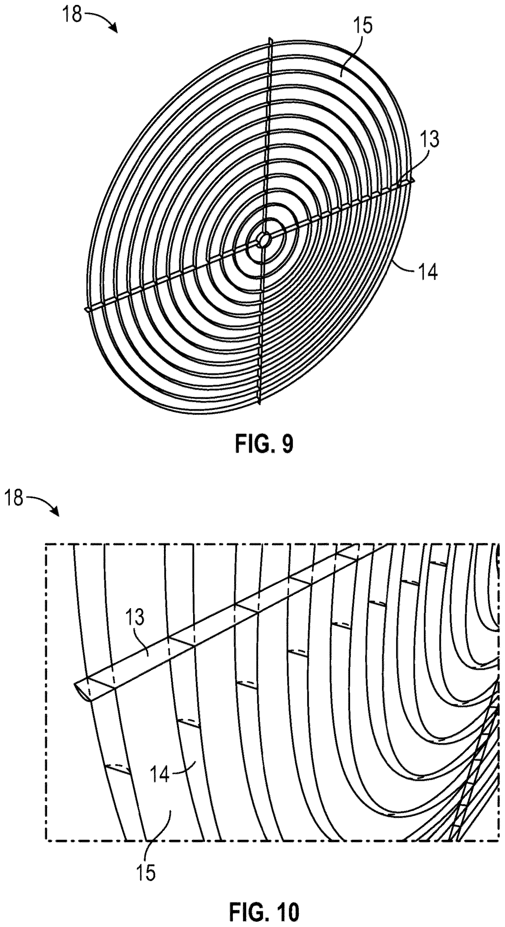

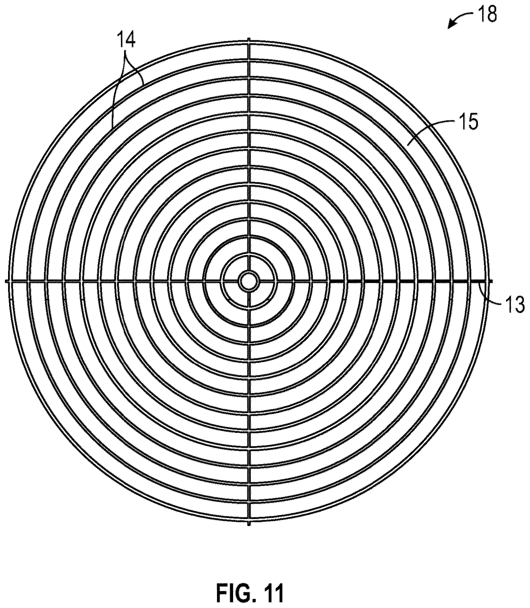

In one preferred embodiment, the optional rear-mounted arrangement (18) (Figs. 9, 10, 11, 12), which can also preferably serve as a secondary WDE device, may be additionally or optionally located on the back/downstream side of a turbine-like device (8), to induce/create/increase a low-pressure field/area downstream of its position. This low- pressure field/area-inducing device (18) can have any configuration of rods that is suitable for reducing the pressure field/area downstream; however, most preferable is to provide an arrangement of hydrofoil/airfoil shaped deflector rods (14) in the form of concentric rings, connected by several radially-extending hydrofoil-shaped connector rods (13) (Figs. 9, 11). This low-pressure field/area-inducing device (18) further enhances the efficiency of the turbine-like device (8), by creating an additional or increasing an existing negative pressure field/area at the exit of and behind the turbine-like device. This negative pressure field will accelerate the flow through the rotor section of the turbine-like device, by aspirating the water through the rotor section from behind the turbine-like device and accelerating the flow-through speed. This effect will further enhance efficiency or increase performance of any turbine-like device, in comparison to the use of other WDE devices or even the absence of such a WDE device.

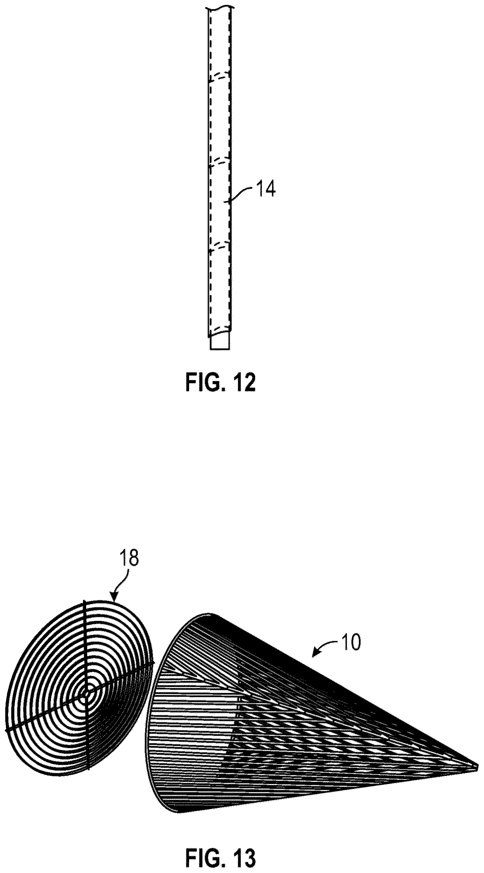

The hydrofoil/airfoil shaped concentric rings of rods (14) are oriented with the extrados of the hydrofoil/airfoil rings facing at an angle toward the center of the ring and the intrados of the hydrofoil/airfoil rings facing the outside of the ring (Figs. 10, 12). This angle can be generally between about 2° and 35°, and more preferably between about 5° and 20°, and can be different in different areas of the arrangement. This will deflect the water away from the center and toward the outside perimeter of the turbine-like device (8), thereby to create the negative pressure field/area located in the center and downstream of the exit of the turbine-like device. Thus, there are two separate causes for the negative pressure field/area, namely, the re-direction of the flow of the fluid by the orientation of the ring elements, and separately by the flow-accelerating effect produced by the hydrofoil/airfoil configuration of the ring elements. Either feature can be used separately, or they can preferably be used in combination, as illustrated in the preferred embodiment of Figs. 10 and 12. The effects of this low-pressure field/area inducing device and the decreased pressure behind the device and flow acceleration become visible in the CFD analysis (Figs. 14, 15, 16). This low-pressure field/area inducing device will also prevent any wildlife or debris to enter the rotor section from behind a turbine-like device.

The design of these fluid dynamic arrangements is scalable in size (Fig. 13), which means they can easily be adapted and optimized for any given size of turbine intake and for different flow speeds and flow volumes and different densities of the fluid with only minor changes to the hydrofoil/airfoil shapes. These hydrofoil/airfoil shapes may be modified in shape/cross-section, cord length, cord thickness, incidence/angle of attack, aspect ratio and size to have the optimal effect on the specific fluid they will be operating in. The hydrofoil/airfoil shapes will preferably also be optimized for the flow velocity of the fluid that is present at any given location/environment in which a turbine-like device is designed to be used. All these adjustments to the shapes for optimization are minimal, and the principle of functionality remains exactly the same. By adjusting the before-mentioned parameters, the arrangements of this invention can be optimized for a vast number of different operational applications. CFD is one very useful tool for carrying out optimization in accordance with the foregoing description.

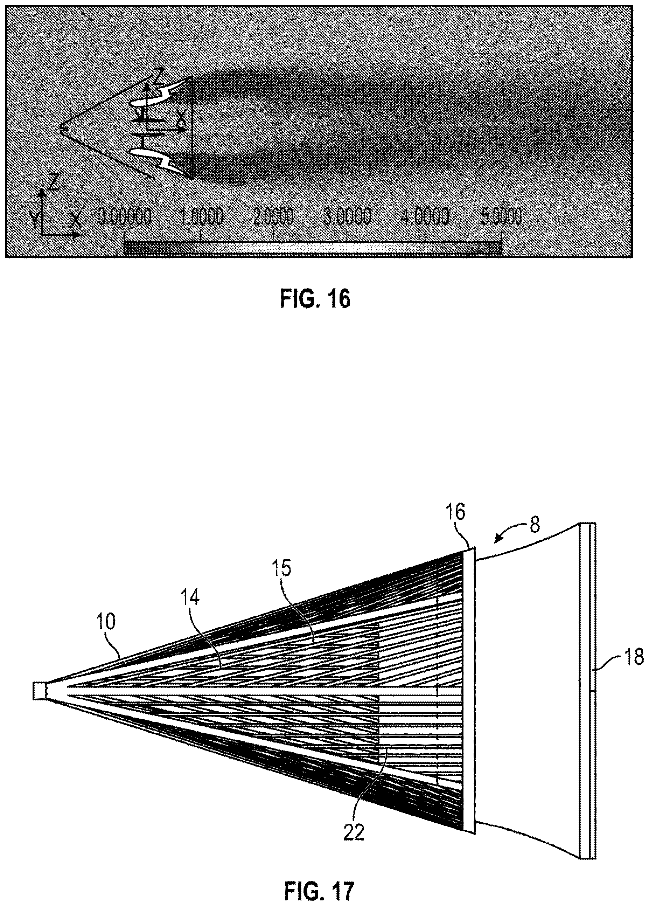

The arrangements (10) and/or (18) may also act as a WDE to protect the intake of any turbine-like device (8). These arrangements have the added advantage that they are also designed to increase the environmental friendliness and protect the internal parts of the turbine-type apparatus in front and/or behind which they are placed. Thus, the most preferred embodiments of the invention are represented by a turbine-like device (8) in combination with one or both of the accelerated and/or redirected flow-inducing and/or low-pressure field-inducing arrangements described above. See, e.g., Fig. 17.

The size of the wildlife and debris to be excluded or prevented from entering the rotor section of a turbine-like device is determined by the spacing of the hydrofoil/airfoil shaped array of deflector rods (13), (14) on the forward excluder (10) and/or deflector rings the rear excluder (18). Deflector rods and deflector rings preferably run parallel in order to have equal distance/spacing of the deflector rods/rings along the full length of each individual pair of rods/rings and assure uniform size of wildlife or debris to be deflected and excluded.

The accelerated and/or redirected flow-inducing, preferably a vorticized/rotational flow-inducing and/or low-pressure field/area inducing arrangements according to the invention have the purpose of increasing the performance, power/energy output and efficiency of any rotating turbine-like devices, and further optionally and advantageously provide the function of serving as wildlife and debris excluding (WDE) devices for the turbine-type devices.

With the foregoing explanation of the principles by which the devices of the invention operate, it is apparent that there are a multitude of different physical designs/configurations that can be used to achieve an accelerated and/or redirected flow of fluid at or near the inlet of a turbine-like device and/or at its outlet. One particularly preferable type of design, which produces a vortex/rotational acceleration and redirection of fluid, has been described in detail above and in the accompanying figures of drawings, to illustrate the broader principles and scope of the invention. This disclosure/illustration is not intended to be in any way limiting of the invention. Further, it should also be clear that the accelerated and/or redirected flow-inducing, preferably a vorticized/rotational flow- inducing, and/or low-pressure field/area inducing arrangements according to the invention can be used independently of their serving also as WDE devices.

The accelerated and/or redirected flow-inducing, preferably a vorticized/rotational flow-inducing and/or low-pressure field/area inducing arrangements according to the invention can effectively work in any type of fluid and can be optimized to have the maximum effect on the fluid in which they operate, with minor adjustments to the preferably hydrofoil/airfoil shaped deflector rods of the devices. Preferably, the devices play the dual role of enhancing the efficiency of the turbine-like machines with which they are employed, while at the same time serving as WDE devices. In their preferred employment, the arrangements of the invention can effectively work on any size of turbinelike device, and can be optimized to have the maximum effect on the fluid in which they operate, with minor adjustments to the hydrofoil/airfoil shaped deflector rods of the devices.

As noted above, the accelerated and/or redirected flow-inducing, preferably a vorticized/rotational flow-inducing and/or low-pressure field/area inducing arrangements according to the invention can be utilized in connection with a wide variety of turbine-like devices. Most preferably, arrangements of the invention are employed in combination with a turbine-like device that is typically composed of three main components, a) a flow accelerator shroud, b) an optional annular diffuser following the flow accelerator shroud, and c) a main rotor which is built into the accelerator shroud but is a separate part. Some of these components typically comprise several different sub-parts that are assembled to be one part of the turbine. Preferred turbine-like devices are those described in published patent application WO 2016/130984 A2. The preferred aspects of these turbine-like devices are also described here.

### The Flow Accelerator Shroud with the Annular Diffuser

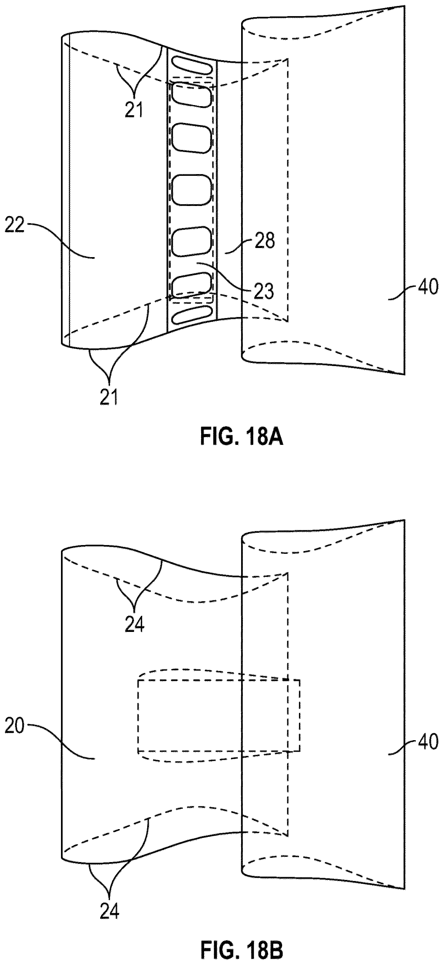

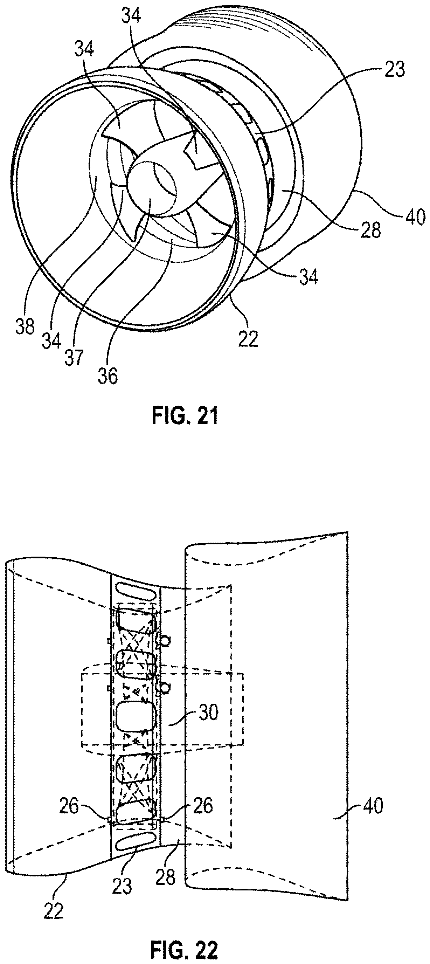

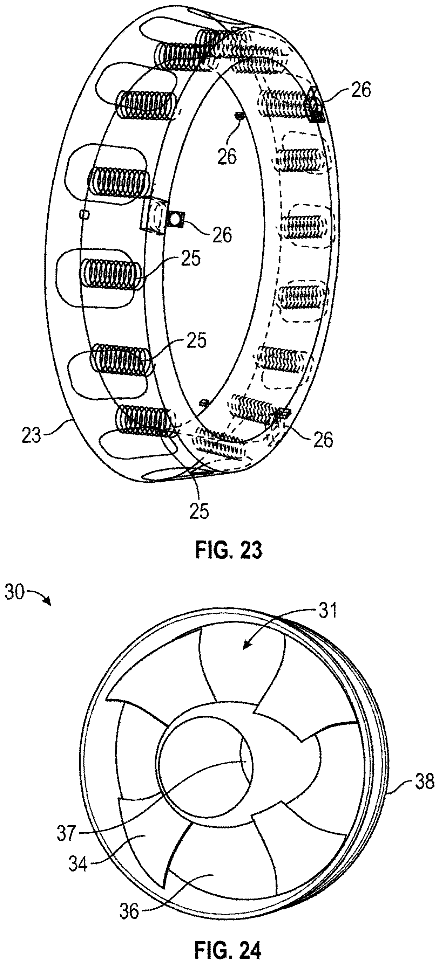

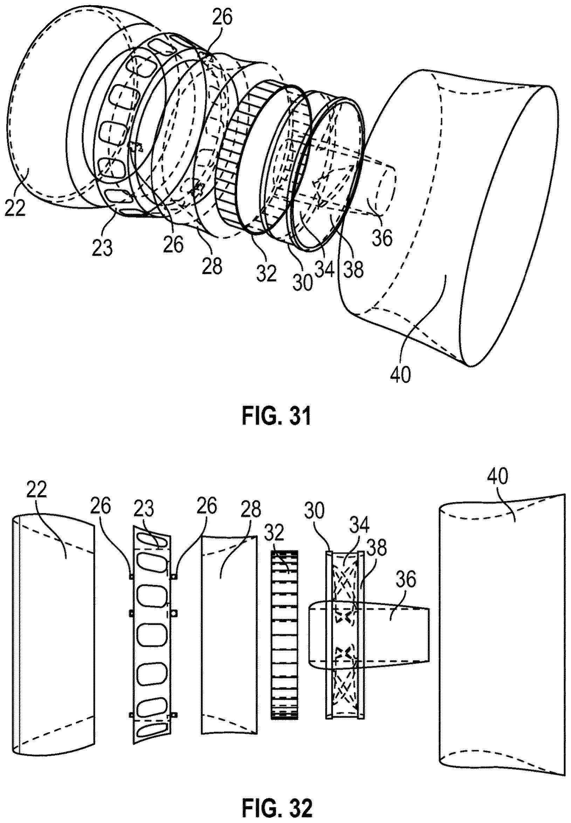

Referring now to Figs. 18A, 18B, 21 and 31, the flow accelerator shroud (20) embodies the most complex hydrofoil shape. It preferably has an asymmetrical hydrofoil shape and in some embodiments an S-shaped/double-curved hydrofoil shape (Fig 18 A), or in other words a generally S-shaped double-curved configuration (Fig. 22), to create a negative pressure field behind the shroud in order to accelerate the water flow through the rotor section (30) of the turbine. The cross-section of the wall of the accelerator shroud may also be a hydrofoil shape that is not an S-shaped double-curved, but resembles much more conventional hydrofoil shapes (Fig. 18B). The accelerator shroud accelerates the flow of the water on the inside of the turbine in comparison to the ambient flow speed around outside the accelerator shroud. The accelerator shroud is preferably composed of four pieces: entrance duct (22), the stator housing (24), the rotor blade shroud (38) (Fig. 24) and the aft fairing (28). These four components together preferably form a single shape, which is preferably the asymmetrical hydrofoil of the accelerator shroud, which in certain preferred embodiments has the S-shaped/double-curved hydrofoil shape. All four pieces are preferably faired together to form a perfectly smooth surface both inside and outside, over which the water flows without creating any significant turbulence. The entrance duct (22) serves to funnel the water flow into the rotor section (30) and to lead the water flow onto and over the stator housing (23) on the outside of the accelerator shroud and over the rotor blade shroud (38) on the inside. This stator housing exterior surface and the rotor blade shroud interior surface are part of the overall shape of the accelerator shroud. The entrance duct also contains the forward thrust bearings that guide the rotor section during operation.

The stator housing (23) contains all the metallic, preferably copper, coils (25) that comprise the stator of the annular generator, as well as the conventional electrical wiring (not shown) to convey the electrical energy generated out of the turbine. The stator housing also contains the rotational roller/ball bearings (or other bearings or low friction polymer bushings) (26) on which the rotor section rotates.

The exterior surface of the rotor blade shroud (38) forms part of the accelerator shroud but is a separate part that is attached to the rotor blade tips (33) and rotates with the main rotor inside the accelerator shroud. It is described in more detail below.

The aft fairing (28) located behind the stator housing (23) and rotor blade shroud (38) leads the water flow to the exit of the accelerator shroud (20) and preferably has a feather edge (29) on the back end to avoid creating any turbulence or drag. The aft fairing also contains the aft/rearward thrust bearings (26) (Fig. 22) against which the rotor section is pushed while rotating.

The annular diffuser (40) is also preferably an asymmetrical hydrofoil shaped ring and preferably has a greater diameter than the accelerator shroud (20). The annular diffuser (40) is located behind the accelerator shroud and preferably overlaps somewhat over the aft end of the accelerator shroud (20). It works in a manner very similar to the accelerator shroud, further increasing the negative pressure field behind the turbine. Because of the cooperation and resulting synergistic effect of the accelerator shroud and the annular diffuser, there is a greater augmentation of flow speed through the rotor section. Generally, at a position relatively closely (e.g., from about 4 to 6 inches) behind the trailing edge of the (final) annular diffuser, which is preferably a feather edge, the rear wildlife and debris excluder is attached. There may be some instances in which it may be advantageous, e.g., specific water flow conditions, to employ one or more annular diffusers, such as second annular diffuser (42) and maybe even a third annular diffuser (44), positioned one behind the other. (Figs, 19-20)

### The Rotor Assembly

Turning now to Figs. 24-30, the hydrokinetic turbines preferably have an open center (37). The extremities of the rotor blades (34) travel through the water at a higher speed and therefore create substantially more lift and allow substantially greater energy extraction. Depending on the size of the turbine, the flow speed at a location of the installation and other site-specific needs, the ratio between open center and blade and hub size can be anywhere from about 40% blade:60% open space, to about 80% blade:20% open space. Turbines of this type advantageously use the major portion of the overall diameter along the perimeter of the rotor section to produce lift, typically more than about 60% and more preferably approximately 2/3 of the diameter. This leaves the remaining minor portion, e.g., in a preferred embodiment approximately 1/3 of the overall diameter in the center open (37). These designs create a more efficient rotor section that uses a smaller blade area with less weight, with less wetted area and less drag, which can rotate at higher rpm rates and allow more energy to be extracted. There is also a secondary effect that is of further benefit to the wildlife and debris excluder that is described below.

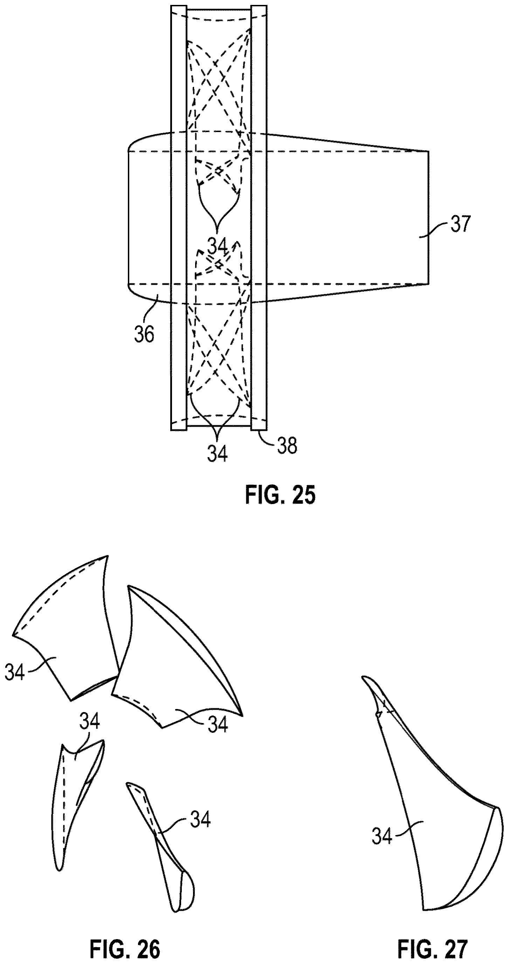

The center hub (36, 80). that is preferably annular and surrounds the preferably open center (37), is also used for attaching the rotor blade roots (39). (Figs. 25-26 and 31) A center hub (80) that is solid preferably has a symmetrical hydrofoil shape, whereas the center hub (36) with open center preferably has an asymmetrical hydrofoil shape, with the extrados being toward the outside of the turbine and the intrados facing toward the center of the hub. The lift created by the center hub helps further increase the negative pressure field behind the turbine created by the accelerator shroud (20) and the annular diffuser (40). This effect increases the acceleration of the water flow through the rotor blade section and contributes to the synergistic effect and resultant higher power generation.

The rotor blade shroud (38) (also called the outer ring of the main rotor) is where the extremities/tips (33) of the blades (34) are attached. (Fig. 24) This rotor blade shroud (38) forms a part of the hydrofoil shape of the accelerator shroud (20). It is a separate element from the accelerator shroud allowing it to rotate with the rotor blades (34), but the surface of the rotor blade shroud is preferably perfectly in line with the inside surface of the accelerator shroud (20) to create one smooth curve of both inside surfaces, accelerator shroud and rotor blade shroud. The outside surface of the rotor blade shroud, which faces the stator housing (23) interior surface, is preferably recessed into the accelerator shroud and has a flat surface where the permanent magnets (32) are located which rotate past the copper coils (25) of the stator to produce the electrical energy. The rotor blade shroud (38) also eliminates tip vortex and reduces drag and turbulence, resulting in higher efficiency and greater energy extraction.

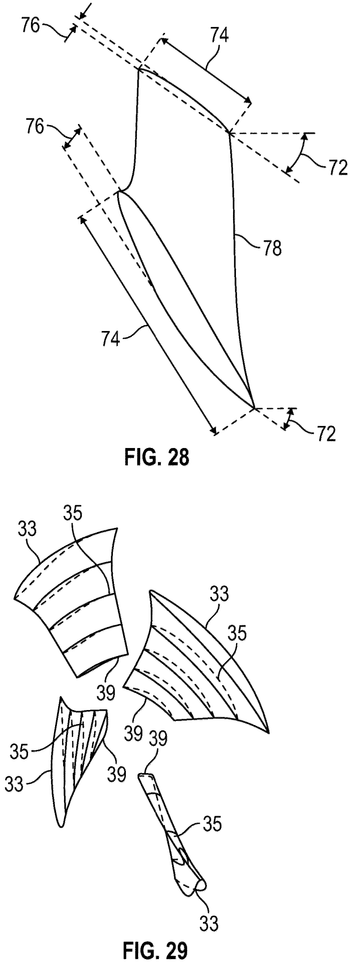

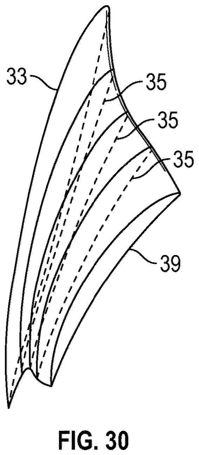

Referring now to Figs. 25-30, the efficiency of the rotor blades (34) is increased by preferably using an asymmetrical hydrofoil shape, which is also preferably optimized, as explained below. This shape, also called the cord or cross-section (35) of the hydrofoil, results in an increase of the efficiency of each blade, reduces it in size and decreases the number of blades relative to other designs. A smaller rotor blade (34) has less wetted area, thus producing less drag. The amount of lift a hydrofoil shape generates is determined by the shape of cord/cross-section (35) (Fig. 30), the length of cord (74) and the thickness of cord (76) of the hydrofoil. (Fig. 28) In designs according to the invention, one or both, the length of cord (74) and/or the thickness of cord (76) preferably change between the blade root (39) and the blade tip (33). This optimizes the lift created by the hydrofoil shape in relation to the speed it travels through the water. The number of blades put into the rotor section of designs according to the invention may vary depending on the size of the turbine and the flow speed of the water in a particular application.

The angle/incidence (72) (Fig. 28) at which the rotor blades are installed is also a variable that can be adjusted for the purpose of optimizing the angle of attack or incidence of the blade traveling through the water. It is preferred to use an optimum angle which is determined by the rpm of the rotor to produce a laminar or at least a near laminar flow of the water over the blade surface. If this flow is turbulent or significantly non-laminar, the hydrofoil creates less lift, and therefore less energy can be extracted. The tip of the blade travels through the water faster than the root of the blade, due to the fact that it travels a longer distance to complete one rpm. Therefore, the incidence of the blade advantageously decreases gradually from the root (39) of the blade to the tip (33) of the blade, in order to be at the optimal angle. This change in angle is called the twist (78) of the blade. The twist is preferably designed to create a rotor blade maximum lift at every cross-section and therefore to increase the efficiency and the power extraction.

For preferred hydrofoil shapes to be optimal while they travel through the water at different speeds, they preferably have different lengths of cord (74) and different thicknesses of profile/cord (76). Preferably, the thickness (76) of the blade increases and/or the cord length (74) increases from the root of the blade toward the tip of the blade, i to increase the surface area where the blade travels though the water with higher speed and creates the greatest amount of lift. Thus, the blades most preferably increase in both size and thickness as they extend radially from the hub. These increases in cord length and thickness result in higher efficiency and greater power extraction.

The rotor blades hydrofoil shape (3 5), the length of cord (74), the thickness of profile/cord (76), the degree of incidence (72), and the twist (78) of each rotor blade, and the number of blades can advantageously be varied for each application, in order to adapt to site-specific flow conditions of the water and other locational needs.

### The wildlife and debris excluder(s)

Referring now primarily to Fig. 17, a preferred hydrokinetic turbine is one that deflects and keeps any marine life and floating or submerged debris above a specified size out of the hydro-kinetic turbine's rotor. The size of marine life or debris that cannot enter the nozzle section of the turbine is specified by the spacing/distance (15) of the deflector rods (14) of the forward and rear excluder. In this invention the deflector rods, by design, run parallel to each other and are evenly spaced over their full-length to ensure that no distance between the rods (15) is greater in one place than in another. The distance of the spacing (15) is determined by the size and the species of marine wild life as well as the size of debris encountered to be excluded and to adapt to locational needs of specific sites of operation

The hydrokinetic turbines employed according to the invention preferably have two wildlife and debris excluders, one (10) in front at the entrance (22) of the turbine and one (18) behind at the exit of the turbine. The front wildlife and debris excluder (10) is located in front of the turbine protecting the entrance (22) of the accelerator shroud (20), and is attached to the front end of the accelerator shroud as well as preferably to any support structure of the turbine. The deflector rods (14) of the excluder may be made of metal, fiberglass or synthetic materials with different diameters depending on the turbine size; from about V4 inch on a small turbine and up to about 3 inches on very large units.

The first/forward wildlife and debris excluder (10) is preferably built so that the deflector rods on the forward end of the front excluder (14) form a generally cone-like shape. The deflector rods on the forward end are attached to a small ring (12) that preferably has the same inside diameter as the specified distance (15) between the insides of the deflector rods. On the back end, the deflector rods are preferably attached to a large ring (16) which is preferably greater diameter than the annular diffuser (40). The slope of the cone-like shape created by the difference between the forward ring (12) and the aft ring (16), to which the deflector rods (14) are attached, can be altered to adapt to different environmental needs. The front excluder is preferably positioned so as to slightly overlap the annular diffuser with a gap that is approximately the same size as the distance (15) between deflector rods, in order to maintain a finite size of wildlife and debris allowed to enter, it is designed to be cone-like shaped in order to shed off and divert any wildlife, debris, sea grass or whatever else may be floating in the stream of water about to enter the turbine.

The second/aft wildlife and debris excluder (18) (Fig. 17) is located behind the turbine exit and is attached to the trailing edge of the (final) annular diffuser. The rear excluder is preferably also comprised of a grill or mesh of equally-spaced rod members that are spaced apart from one another by the same pre-determined distance as the rods (14) in the front excluder, and in the case of the rear excluder, the most preferred configuration is a generally planar one. The rear excluder prevents larger sea life from entering into the rotor section from behind, even against the direction of the water current or also in the case of no current as for example during the change from an incoming to an outgoing tide. The deflector rods of the excluder are spaced to the same specified distance (15) as the forward wildlife and debris excluder to prevent any wildlife or debris larger than the specified distance from entering into the rotor section. The annular generator design preferably has magnets (32) mounted on the rotor blade shroud (38) and copper or other metallic coils (25) in the stator housing (24) which is preferably located inside the accelerator shroud (20). This design eliminates the need for a gearbox or transmission or hydraulic systems to mechanically extract and convey the energy out of the turbine. The preferred design employed in the present invention also eliminates the need to have center bearings, which thereby eliminates the need for any fixed structure whatsoever (e.g., shaft or hub) located within the flow area through the turbine. The absence of any fixed structure furthermore means that no struts or other elements are needed to support that fixed structure.

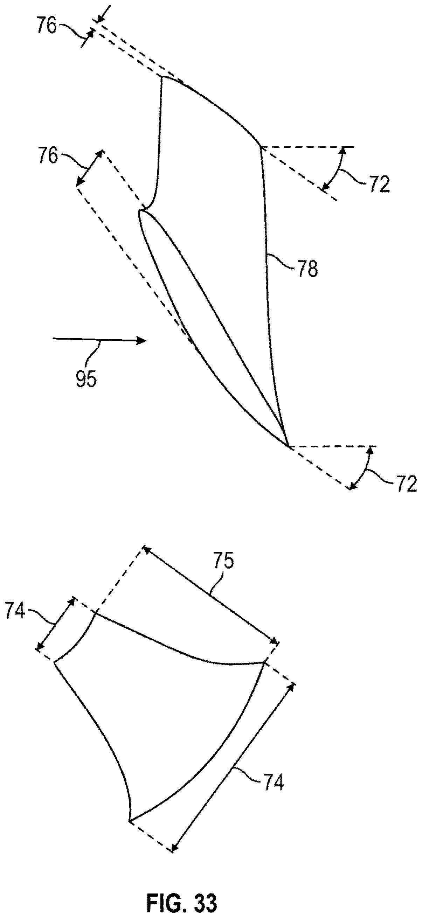

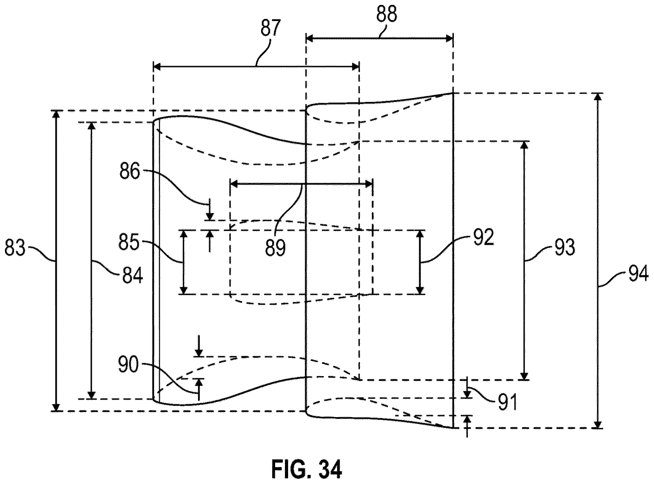

In Figures 33 and 34 some of the important dimensions and relationships are shown in connection with one preferred embodiment of a turbine that can be employed in conjunction with the accelerated and/or redirected flow-inducing, preferably a vorticized/rotational flow-inducing and/or low-pressure field/area inducing arrangements according to the invention.

### Legend for Figure 34

87 Length of accelerator shroud
88 Length of diffuser
89 Length of center hub
90 Profile/cord thickness of accelerator shroud
91 Profile/cord thickness of diffuser
92 Diameter of center hub exit
93 Diameter of accelerator shroud exit
94 Diameter of diffuser exit

CFD analysis has shown for tested embodiments that, when both an accelerated and/or redirected flow, preferably a vorticized or rotating flow arrangement is used on the inlet side and a low-pressure field/area inducing arrangement is used on the output side, the flow acceleration through a turbine-like device (such as those described in patent application WO 2016/130984 A2) is typically increased by approximately 30%, but may be increased by an amount as low as 5% or as high as 50%, depending on the flow conditions and turbine type. In Fig. 14 it can be seen that the flow acceleration through the rotor section is increased to almost 5 m/s, and in the center of the low-pressure field/area inducing device it is increased to over 4 m/s. The pressure differentials, if measured forward of the intake and downstream of the outlet, have been shown to be approximately 0.035 bar, but can be as high as 0.2 bar. This pressure differential between intake and outlet contributes substantially to the flow acceleration of the fluid. Fig. 15. shows that the pressure differential between the ambient pressure and the center of the rotor section can be as high as 0.2 bar. Fig. 16 illustrates the directional change of the water flow inside the accelerated and/or redirected flow inducing arrangement and behind the low-pressure field/area inducing arrangement. In the test cases, the arrangements described in the application clearly enhance the performance of turbine-like devices.

A further CFD simulation involves two types of vorticized flow inducing wildlife and debris excluder, i.e., in one simulation a right-hand spin was produced, and in the other simulation a left-hand spin is generated in the incoming fluid. In both simulations, the rotor is turning in the counter-clockwise direction. Thus, with the left hand spin the water hits the rotor blade surface at a steeper/greater angle; whereas with the right hand spin the water hits the blade surface at a shallower/lesser angle. In both simulations the same flow velocity of 1.5 m/s and the same rotor RPM of -480 RPM (counterclockwise from the front).

### Method of evaluation

these are the parameters used to evaluate the difference in performance, i.e., increase or decrease of flow acceleration and pressure differentials between intake and outlet of:
measurement of flow speed through center hub
measurement of flow speed through the rotor section between center hub and blade tip measurement of flow speed on rotor blade surface
measurement of pressure before the intake of the turbine
measurement of pressure behind the outlet of turbine
pressure differential between intake and outlet of the turbine
final comparison against turbine with and without wildlife and debris excluder

The numbers obtained from these different measurements are compared to one another and converted into a percentage number of the flow acceleration.

### Conclusions from Experiment

The pressure differential between intake and outlet is greater with the turbine having a WDE with the right-hand spin than it is for the one with the left-hand spin, but the flow acceleration is generally higher with the WDE inducing a left-hand spin.

The flow acceleration in comparison to the ambient flow speed through the center hub is the same for both turbines despite the opposite directions of spin. Comparison to the ambient flow speed is increased to 127%

The flow acceleration in comparison to the ambient flow speed through the rotor section, between the center hub and the blade tips, is greater for the left-hand-spin WDE then it is for the right-hand-spin WDE. The flow acceleration is increased to 253% on the left- hand-spin WDE, whereas the right-hand spin is increased to 247%.

The flow acceleration in comparison to the ambient flow speed on the rotor blade surface is greater with the left-hand-spin WDE than it is with the right-hand-spin WDE. The left- hand-spin flow acceleration is increased to 447%, whereas the right-hand-spin is increased to 420%.

This paragraph is a comparison of the exact same hydrokinetic turbine, one with a vorticized flow inducing wildlife and debris excluder and one without wildlife and debris excluder, i.e., just the bare turbine. Here only flow velocity over the rotor blade surface is compared for both arrangements. Maximum increase in flow acceleration on the rotor blade surface of the turbine with a left-hand-spin WDE is 122% over a turbine without a WDE, and with the right-hand-spin WDE only 115% over the bare turbine. Nonetheless, in both cases, left-hand- or right-hand-spin WDE, the output is greater with the device in place than a turbine that does not have a WDE. Previous studies have shown that a wildlife and debris excluder typically diminishes the flow acceleration by 2% to 3%.

The data show that it is advantageous to have an accelerated and/or redirected flow- inducing, preferably a vorticized/rotational flow-inducing arrangement, as described above according to the invention, in front of the turbine to increase the flow-through velocity and therefore energy output. The net increase provided by the new vorticized flow inducing arrangement does not merely reduce the original negative effect of using a WDE, but rather the negative effect is eliminated and the new WDE arrangement increases the flow speed, thereby providing a total benefit of up to 25% additional flow acceleration.

## Claims

1. A combination comprising a hydro-kinetic turbine device (8) in combination with a redirected flow-inducing arrangement, wherein
the hydro-kinetic turbine device (8) comprises a fluid inlet end and a fluid outlet end for fluid flowing therethrough, defining a direction of fluid flow through the device (8), an accelerator shroud that has a longitudinal central axis and defines within its cross-section a fluid flow area and includes a rotor assembly that is mounted within the accelerator shroud for rotation around the longitudinal central axis, and includes a plurality of rotor blades (34) extending radially outwardly within the accelerator shroud; and
the redirected flow-inducing arrangement comprises a rear deflector (18) forming a wildlife and/or debris deflector positioned downstream of the rotor assembly of the turbine device (8), wherein the deflector comprises an array of deflector rods (14) that have an acceleration-causing hydrofoil cross-section and wherein deflector rods (14) are oriented with respect to one another in such a way as to produce at least the effect on the fluid flowing through the turbine device (8) of imparting a re-direction of the fluid as it passes through the deflector;
wherein the hydrofoil cross-section deflector rods (14) of the rear deflector (18) have a pattern of concentric rings to produce a decrease in pressure downstream of the outlet end of the turbine device (8), by a radial redirection of the fluid with respect to the direction of fluid flow through the rear deflector (18).

2. The combination as claimed in claim 1, wherein the redirected flow-inducing arrangement further comprises a forward deflector (10) that comprises a conically-shaped array of deflector rods (14) that includes a plurality of deflector rod sub-arrays (9), wherein the deflector rods (14) in each sub-array (9) run parallel to other deflector rods (14) in the same sub-array (9), but have a different orientation of deflector rods (14) in adjacent sub-arrays (9), and wherein the sub-arrays (9) are oriented with respect to one another so that the acceleration-causing hydrofoil cross-section rods in each respective sub-array (9) combine to produce a re-direction of the fluid that comprises at least some rotational re-direction in a single direction of rotation, as well as an acceleration of the fluid in the axial direction of the turbine device (8).

3. The combination as claimed in claim 2, wherein the concentric rings are equally spaced rings, and the parallel deflector rods (14) in the sub-arrays (9) in the forward deflector (10) are equally spaced from each other, preferably by a distance equal to the spacing of the rear array deflector rods (14).

4. The combination as claimed in claim 1 or claim 2, wherein the pattern of concentric rings are equally spaced rings.

5. The combination as claimed in any preceding claim, wherein the rotor assembly is mounted for support and rotation on the inner surface of the accelerator shroud, and includes a center hub (36, 80), and wherein the plurality of rotor blades (34) are mounted on the center hub (36, 80) at their radially inner ends, and the center hub (36, 80) has an open center (37) defined by a wall member that has a hydrofoil-shaped cross-section.

6. The combination as claimed in any of the preceding claims 2-5, wherein, said rotor blades (34) are configured to rotate the rotor assembly in a first direction of rotation in response to fluid flowing in the direction of fluid flow through the turbine device (8), and wherein the forward deflector (10) is configured to produce a re-directed fluid flow that includes at least some rotational re-direction of the fluid in a second direction of rotation that is opposite to said first direction of rotation of the rotor assembly.

7. The combination as claimed in claim 5, wherein said rotor assembly further comprises an outer rotor ring to which the rotor blades (34) are also attached at their radially outer ends.

8. The combination as claimed in any preceding claim, wherein at least some of the rotor blades (34) have an asymmetrical hydrofoil cross-sectional shape, and wherein, preferably, at least some of the rotor blades (34) have a blade thickness that is greater at their radially outer ends than at their radially inner ends.

9. The combination as claimed in any of the preceding claims 2-8, wherein the deflector rods (14) in the sub-arrays (9) of the forward deflector that form the conically shaped forward deflector run parallel to one another in each respective sub-array (9), and have a spacing in each sub- array (9) that is equal, thereby defining the maximum size of object that can pass through the wildlife and/or debris deflector

10. A method for enhancing the performance of combination comprising a hydro-kinetic turbine device (8) in combination with a redirected flow-inducing arrangement as claimed in any preceding claim, the method comprising:
causing the fluid to flow through the turbine device (8); and
causing the flowing fluid to pass through a forward wildlife and/or debris deflector placed in front of the fluid inlet end of the turbine device (8) and comprising an arrangement that creates a redirected flow-inducing effect, and wherein the forward deflector comprises an array of deflector rods (14) that have an acceleration-causing hydrofoil cross-section and wherein deflector rods (14) are oriented with respect to one another in such a way as to produce at least the effect on the fluid flowing through the turbine-device (8) of imparting a rotational re-direction of the fluid as it passes through the deflector

11. The method as claimed in claim 10, wherein the forward wildlife and/or debris deflector is configured to produce a vorticized or rotating flow on the inlet side of the turbine device (8).

12. The method as claimed in either claim 10 or claim 11, further comprising causing the fluid to flow through the rear wildlife and/or debris deflector that is configured to induce a reduced- pressure field or area on the exit side of the turbine device (8), by creating a re-directed flow through the rear deflector, that comprises a planar array of deflector rods (14) arranged in concentric circles.

13. The method as claimed in any one of claim 10 through claim 12, wherein the forward wildlife and debris deflector comprises a
conically-shaped array of deflector rods (14) that includes a plurality of deflector rod sub-arrays (9), wherein the deflector rods (14) in each sub-array (9) run parallel to other deflector rods (14) in that sub-array (9), but have a different orientation of deflector rods (14) in adjacent sub-arrays (9), and wherein the sub-arrays (9) are oriented with respect to one another so that the asymmetric hydrofoil cross-section rods in each respective sub- array (9) combine to produce a re-direction of the fluid that comprises at least some rotational re-direction in a single direction of rotation, as well as an acceleration of the fluid in the axial direction of the turbine device (8).

14. The method as claimed in claim 13, wherein the rear wildlife and debris deflector comprises a planar array of deflector rods (14) arranged in concentric circles that are equally spaced, wherein the deflector rods (14) of the rear array have an acceleration- causing hydrofoil cross-section and are oriented with respect to one another to produce a decrease in pressure at the outlet end of the turbine device (8), by a radial redirection of the fluid with respect to the direction of fluid flow through the rear deflector, and wherein the equal spacing between the concentric circles of rear deflector rods (14) is equal to the spacing between the parallel rods in the sub-arrays (9) of the forward deflector, to define a maximum size of wildlife and/or debris that is allowed to pass through the turbine device (8).

15. The method as claimed in claim 13, wherein the sub-arrays (9) of deflector rods (14) of the forward wildlife and debris deflector are configured to produce a rotating flow having a direction of rotation opposite to the rotation direction of the rotor blades (34).

## Patentansprüche

1. Kombination, die eine hydrokinetische Turbinenvorrichtung (8) in Kombination mit einer umgelenkten strömungsinduzierenden Anordnung umfasst, wobei
die hydrokinetische Turbinenvorrichtung (8) ein Fluideinlassende und ein Fluidauslassende für durchströmendes Fluid umfasst, die eine Richtung der Fluidströmung durch die Vorrichtung (8) definieren, eine Beschleunigerabdeckung, die eine longitudinale Mittelachse aufweist und in ihrem Querschnitt einen Fluidströmungsbereich definiert und eine Rotorbaugruppe einschließt, die innerhalb der Beschleunigerabdeckung zur Rotation um die longitudinale Mittelachse montiert ist, und eine Vielzahl von Rotorschaufeln (34) einschließt, die sich innerhalb der Beschleunigerabdeckung radial nach außen erstrecken; und
die umgelenkte strömungsinduzierende Anordnung einen hinteren Deflektor (18) umfasst, der einen stromabwärts der Rotorbaugruppe der Turbinenvorrichtung (8) positionierten Wild- und/oder Trümmerdeflektor bildet, wobei der Deflektor ein Array von Deflektorstäben (14) umfasst, die einen beschleunigungsverursachenden hydrofoilen Querschnitt aufweisen, und wobei die Deflektorstäbe (14) so zueinander ausgerichtet sind, dass sie mindestens den Effekt auf das durch die Turbinenvorrichtung (8) strömende Fluid haben, dass sie eine Umlenkung des Fluids bewirken, wenn es durch den Deflektor strömt;
wobei die Deflektorstäbe (14) des hinteren Deflektors (18) mit hydrofoilem Querschnitt ein Muster konzentrischer Ringe aufweisen, um eine Druckabnahme stromabwärts des Auslassendes der Turbinenvorrichtung (8) durch eine radiale Umlenkung des Fluids in Bezug auf die Richtung des Fluidstroms durch den hinteren Deflektor (18) zu erzeugen.

2. Kombination nach Anspruch 1, wobei die umlenkende strömungsinduzierende Anordnung weiter einen vorderen Deflektor (10) umfasst, der ein konisch geformtes Array von Deflektorstäben (14) umfasst, das eine Vielzahl von Deflektorstab-Unterarrays (9) einschließt, wobei die Deflektorstäbe (14) in jedem Unterarray (9) parallel zu anderen Deflektorstäben (14) in demselben Unterarray (9) verlaufen, aber eine unterschiedliche Ausrichtung von Deflektorstäben (14) in benachbarten Unterarrays (9) aufweisen, und wobei die Unterarrays (9) in Bezug zueinander so ausgerichtet sind, dass die beschleunigungsverursachenden hydrofoilen Querschnittsstäbe in jedem jeweiligen Unterarray (9) zusammenwirken, um eine Umlenkung des Fluids zu erzeugen, die mindestens eine gewisse Rotationsumlenkung in einer einzigen Drehrichtung sowie eine Beschleunigung des Fluids in der axialen Richtung der Turbinenvorrichtung (8) umfasst.

3. Kombination nach Anspruch 2, wobei es sich bei den konzentrischen Ringen um gleichmäßig beabstandete Ringe handelt und die parallelen Deflektorstäbe (14) in den Unterarrays (9) im vorderen Deflektor (10) gleichmäßig voneinander beabstandet sind, vorzugsweise um einen Abstand, der dem Abstand der hinteren Array-Deflektorstäbe (14) entspricht.

4. Kombination nach Anspruch 1 oder 2, wobei das Muster der konzentrischen Ringe aus gleichmäßig beabstandeten Ringen besteht.

5. Kombination nach einem der vorstehenden Ansprüche, wobei die Rotorbaugruppe zur Abstützung und Drehung an der Innenoberfläche der Beschleunigerabdeckung montiert ist und eine zentrale Nabe (36, 80) aufweist, und wobei die Vielzahl von Rotorschaufeln (34) an ihren radial inneren Enden an der zentralen Nabe (36, 80) montiert sind und die zentrale Nabe (36, 80) eine offene Mitte (37) aufweist, die durch ein Wandelement definiert ist, das einen hydrofoilförmigen Querschnitt aufweist.

6. Kombination nach einem der vorstehenden Ansprüche 2 bis 5, wobei die Rotorschaufeln (34) so konfiguriert sind, dass sie die Rotorbaugruppe in eine erste Drehrichtung drehen, wenn Fluid in Richtung der Fluidströmung durch die Turbinenvorrichtung (8) strömt, und wobei der vordere Deflektor (10) so konfiguriert ist, dass er eine umgelenkte Fluidströmung erzeugt, die mindestens eine Rotationsumlenkung des Fluids in eine zweite Drehrichtung einschließt, die der ersten Drehrichtung der Rotorbaugruppe entgegengesetzt ist.

7. Kombination nach Anspruch 5, wobei die Rotorbaugruppe weiter einen äußeren Rotorring umfasst, an dem die Rotorschaufeln (34) auch an ihren radial äußeren Enden befestigt sind.

8. Kombination nach einem der vorstehenden Ansprüche, wobei mindestens einige der Rotorschaufeln (34) eine asymmetrische hydrofoile Querschnittsform aufweisen und wobei vorzugsweise mindestens einige der Rotorschaufeln (34) eine Schaufeldicke aufweisen, die an ihren radial äußeren Enden größer ist als an ihren radial inneren Enden.

9. Kombination nach einem der vorstehenden Ansprüche 2 bis 8, wobei die Deflektorstäbe (14) in den Unterarrays (9) des vorderen Deflektors, die den konisch geformten vorderen Deflektor bilden, in jedem jeweiligen Unterarray (9) parallel zueinander verlaufen und in jedem Unterarray (9) einen gleichen Abstand aufweisen, wodurch die maximale Größe des Objekts definiert wird, das durch den Wild- und/oder Trümmerdeflektor passieren kann.

10. Verfahren zur Verbesserung der Leistung einer Kombination, die eine hydrokinetische Turbinenvorrichtung (8) in Kombination mit einer umlenkenden strömungsinduzierenden Anordnung nach einem der vorstehenden Ansprüche umfasst, das Verfahren umfassend:
Bewirken, dass das Fluid durch die Turbinenvorrichtung (8) fließt; und
Bewirken, dass das strömende Fluid durch einen vorderen Wild- und/oder Trümmerdeflektor fließt, der vor dem Fluideinlassende der Turbinenvorrichtung (8) angeordnet ist und eine Anordnung umfasst, die einen umlenkenden strömungsinduzierenden Effekt erzeugt, und wobei der vordere Deflektor ein Array von Deflektorstäben (14) umfasst, die einen beschleunigungsverursachenden hydrofoilen Querschnitt aufweisen, und wobei die Deflektorstäbe (14) so zueinander ausgerichtet sind, dass sie auf das durch die Turbinenvorrichtung (8) strömende Fluid mindestens die Wirkung haben, dass sie eine Rotationsumlenkung des Fluids bewirken, wenn es durch den Deflektor fließt.

11. Verfahren nach Anspruch 10, wobei der vordere Wildtier- und/oder Trümmerdeflektor so konfiguriert ist, dass er auf der Einlassseite der Turbinenvorrichtung (8) eine vortikulierte oder rotierende Strömung erzeugt.

12. Verfahren nach Anspruch 10 oder 11, weiter umfassend das Veranlassen des Fluids, durch den hinteren Wild- und/oder Trümmerdeflektor zu strömen, der so konfiguriert ist, dass er ein Feld oder einen Bereich mit reduziertem Druck auf der Auslassseite der Turbinenvorrichtung (8) induziert, indem er eine umgelenkte Strömung durch den hinteren Deflektorstab erzeugt, der ein planares Array von Deflektorstäben (14) umfasst, die in konzentrischen Kreisen angeordnet sind.

13. Verfahren nach einem der Ansprüche 10 bis 12, wobei der vordere Wild- und Trümmerdeflektor ein konisch geformtes Array von Deflektorstäben (14) umfasst, das eine Vielzahl von Deflektorstab-Unterarrays (9) einschließt, wobei die Deflektorstäbe (14) in jedem Unterarray (9) parallel zu anderen Deflektorstäben (14) in diesem Unterarray (9) verlaufen, aber eine unterschiedliche Ausrichtung von Deflektorstäben (14) in benachbarten Unterarrays (9) aufweisen, und wobei die Unterarrays (9) in Bezug zueinander so ausgerichtet sind, dass die asymmetrischen hydrofoilen Querschnittsstäbe in jedem jeweiligen Unterarray (9) zusammenwirken, um eine Umlenkung des Fluids zu erzeugen, die mindestens eine gewisse Rotationsumlenkung in einer einzigen Drehrichtung sowie eine Beschleunigung des Fluids in der axialen Richtung der Turbinenvorrichtung (8) umfasst.

14. Verfahren nach Anspruch 13, wobei der hintere Wild- und Trümmerdeflektor ein planares Array von Deflektorstäben (14) aufweist, die in konzentrischen Kreisen mit gleichem Abstand angeordnet sind, wobei die Deflektorstäbe (14) des hinteren Arrays einen beschleunigungsverursachenden hydrofoilen Querschnitt aufweisen und so zueinander ausgerichtet sind, dass sie durch eine radiale Umlenkung des Fluids in Bezug auf die Richtung der Fluidströmung durch den hinteren Deflektor eine Druckabnahme am Auslassende der Turbinenvorrichtung (8) erzeugen, und wobei der gleiche Abstand zwischen den konzentrischen Kreisen der hinteren Deflektorstäbe (14) gleich dem Abstand zwischen den parallelen Stäben in den Unterarrays (9) des vorderen Deflektors ist, um eine maximale Größe von Wild und/oder Trümmern zu definieren, die durch die Turbinenvorrichtung (8) hindurchgelassen werden.

15. Verfahren nach Anspruch 13, wobei die Unterarrays (9) von Deflektorstäben (14) des vorderen Wild- und Trümmerdeflektors so konfiguriert sind, dass sie eine rotierende Strömung mit einer Drehrichtung entgegengesetzt zur Drehrichtung der Rotorschaufeln (34) erzeugen.

## Revendications

1. Combinaison comprenant un dispositif (8) de turbine hydrocinétique en combinaison avec un agencement d'induction de flux redirigé, dans laquelle
le dispositif (8) de turbine hydrocinétique comprend une extrémité d'entrée de fluide et une extrémité de sortie de fluide pour l'écoulement de fluide à travers celles-ci, définissant une direction d'écoulement de fluide à travers le dispositif (8), un carénage d'accélérateur qui a un axe central longitudinal et définit au sein de sa coupe droite une aire d'écoulement de fluide et inclut un ensemble rotor qui est monté au sein du carénage d'accélérateur pour une rotation autour de l'axe central longitudinal, et inclut une pluralité de pales (34) de rotor s'étendant radialement vers l'extérieur au sein du carénage d'accélérateur ; et
l'agencement d'induction de flux redirigé comprend un déflecteur arrière (18) formant un déflecteur à faune et/ou à débris positionné en aval de l'ensemble rotor du dispositif (8) de turbine, dans laquelle le déflecteur comprend un réseau de tiges (14) de déflecteur qui ont une coupe droite d'aile portante provoquant une accélération et dans laquelle des tiges (14) de déflecteur sont orientées les unes par rapport aux autres de façon à produire au moins l'effet sur le fluide s'écoulant à travers le dispositif (8) de turbine consistant à impartir une redirection du fluide lorsqu'il passe à travers le déflecteur ;
dans laquelle les tiges (14) de déflecteur de coupe droite d'aile portante du déflecteur arrière (18) ont un motif de bagues concentriques pour produire une diminution de pression en aval de l'extrémité de sortie du dispositif (8) de turbine par une redirection radiale du fluide par rapport à la direction d'écoulement de fluide à travers le déflecteur arrière (18).

2. Combinaison selon la revendication 1, dans laquelle l'agencement d'induction de flux redirigé comprend en outre un déflecteur avant (10) qui comprend un réseau de tiges (14) de déflecteur de forme conique qui inclut une pluralité de sous-réseaux (9) de tiges de déflecteur, dans laquelle les tiges (14) de déflecteur dans chaque sous-réseau (9) cheminent parallèlement à d'autres tiges (14) de déflecteur dans le même sous-réseau (9), mais ont une orientation différente des tiges (14) de déflecteur dans des sous-réseaux (9) adjacents, et dans laquelle les sous-réseaux (9) sont orientés les uns par rapport aux autres de sorte que les tiges de coupe droite d'aile portante provoquant une accélération dans chaque sous-réseau (9) respectif se combinent pour produire une redirection du fluide qui comprend au moins une certaine redirection de rotation dans un seul sens de rotation, ainsi qu'une accélération du fluide dans la direction axiale du dispositif (8) de turbine.

3. Combinaison selon la revendication 2, dans laquelle les bagues concentriques sont des bagues espacées de manière égale, et les tiges (14) de déflecteur parallèles dans les sous-réseaux (9) dans le déflecteur avant (10) sont espacées de manière égale les unes des autres, de préférence d'une distance égale à l'espacement des tiges (14) de déflecteur de réseau arrière.

4. Combinaison selon la revendication 1 ou la revendication 2, dans laquelle le motif de bagues concentriques représente des bagues espacées de manière égale.

5. Combinaison selon l'une quelconque des revendications précédentes, dans laquelle l'ensemble rotor est monté pour support et rotation sur la surface interne du carénage d'accélérateur, et inclut un moyeu central (36, 80), et dans laquelle la pluralité de pales (34) de rotor sont montées sur le moyeu central (36, 80) à leurs extrémités radialement internes, et le moyeu central (36, 80) a un centre ouvert (37) défini par un organe de paroi qui a une coupe droite en forme d'aile portante.

6. Combinaison selon l'une quelconque des revendications 2 à 5 précédentes, dans laquelle, lesdites pales (34) de rotor sont configurées pour mettre en rotation l'ensemble rotor dans un premier sens de rotation en réponse au fluide s'écoulant dans la direction d'écoulement de fluide à travers le dispositif (8) de turbine, et dans laquelle le déflecteur avant (10) est configuré pour produire un écoulement de fluide redirigé qui inclut au moins une certaine redirection de rotation du fluide dans un second sens de rotation qui est opposé audit premier sens de rotation de l'ensemble rotor.

7. Combinaison selon la revendication 5, dans laquelle ledit ensemble rotor comprend en outre une bague de rotor externe à laquelle les pales (34) de rotor sont également fixées à leurs extrémités radialement externes.

8. Combinaison selon une quelconque revendication précédente, dans laquelle au moins certaines des pales (34) de rotor ont une coupe droite d'aile portante asymétrique, et dans laquelle, de préférence, au moins certaines des pales (34) de rotor ont une épaisseur de pale qui est plus grande à leurs extrémités radialement externes qu'à leurs extrémités radialement internes.

9. Combinaison selon l'une quelconque des revendications 2 à 8 précédentes, dans laquelle les tiges (14) de déflecteur dans les sous-réseaux (9) du déflecteur avant qui forment le déflecteur avant de forme conique cheminent parallèlement les unes aux autres dans chaque sous-réseau (9) respectif, et ont un espacement dans chaque sous-ensemble (9) qui est égal, définissant ainsi la taille maximale d'un objet qui peut passer à travers le déflecteur à faune et/ou à débris.

10. Procédé d'amélioration des performances d'une combinaison comprenant un dispositif (8) de turbine hydrocinétique en combinaison avec un agencement d'induction de flux redirigé selon une quelconque revendication précédente, le procédé comprenant :
le fait d'amener le fluide à s'écouler à travers le dispositif (8) de turbine ; et
le fait d'amener le fluide d'écoulement à passer à travers un déflecteur à faune et/ou à débris avant placé devant l'extrémité d'entrée de fluide du dispositif (8) de turbine et comprenant un arrangement qui crée un effet d'induction d'écoulement redirigé, et dans lequel le déflecteur avant comprend un réseau de tiges (14) de déflecteur qui ont une coupe droite d'aile portante provoquant une accélération et dans lequel les tiges (14) de déflecteur sont orientées les unes par rapport aux autres de façon à produire au moins l'effet sur le fluide s'écoulant à travers le dispositif (8) à turbine consistant à impartir une redirection de rotation du fluide lorsqu'il passe à travers le déflecteur.

11. Procédé selon la revendication 10, dans lequel le déflecteur à faune et/ou à débris avant est configuré pour produire un écoulement tourbillonnant ou rotatif sur le côté entrée du dispositif (8) de turbine.

12. Procédé selon l'une ou l'autre de la revendication 10 ou la revendication 11, comprenant en outre le fait d'amener le fluide à s'écouler à travers le déflecteur à faune et/ou à débris arrière qui est configuré pour induire un champ ou une aire de pression réduite sur le côté sortie du dispositif (8) de turbine, en créant un écoulement redirigé à travers le déflecteur arrière, qui comprend un réseau plan de tiges (14) de déflecteur agencées en cercles concentriques.

13. Procédé selon l'une quelconque de la revendication 10 à la revendication 12, dans lequel le déflecteur à faune et à débris avant comprend un réseau de forme conique de tiges (14) de déflecteur qui inclut une pluralité de sous-réseaux (9) de tiges de déflecteur, dans lequel les tiges (14) de déflecteur dans chaque sous-réseau (9) cheminent parallèlement à d'autres tiges (14) de déflecteur dans ce sous-réseau (9), mais ont une orientation différente des tiges (14) de déflecteur dans des sous-réseaux (9) adjacents, et dans lequel les sous-réseaux (9) sont orientés les uns par rapport aux autres de sorte que les tiges de coupe droite d'aile portante asymétrique dans chaque sous-réseau (9) respectif se combinent pour produire une redirection du fluide qui comprend au moins une certaine redirection de rotation dans un seul sens de rotation, ainsi qu'une accélération du fluide dans la direction axiale du dispositif (8) de turbine.

14. Procédé selon la revendication 13, dans lequel le déflecteur à faune et à débris arrière comprend un réseau plan de tiges (14) de déflecteur agencées en cercles concentriques qui sont espacées de manière égale, dans lequel les tiges (14) de déflecteur du réseau arrière ont une coupe droite d'aile portante provoquant une accélération et sont orientées les unes par rapport aux autres pour produire une diminution de pression à l'extrémité de sortie du dispositif (8) de turbine, par une redirection radiale du fluide par rapport à la direction d'écoulement de fluide à travers le déflecteur arrière, et dans lequel l'espacement égal entre les cercles concentriques des tiges (14) de déflecteur arrière est égal à l'espacement entre les tiges parallèles dans les sous-réseaux (9) du déflecteur avant, pour définir une taille maximale de la faune et/ou de débris qui est autorisée à passer à travers le dispositif (8) de turbine.

15. Procédé selon la revendication 13, dans lequel les sous-réseaux (9) de tiges (14) de déflecteur du déflecteur à faune et à débris avant sont configurés pour produire un flux rotatif ayant un sens de rotation opposé au sens de rotation des pales (34) du rotor.
